# EUROPEAN PATENT APPLICATION

(11) **EP 4 186 588 A1**
(43) Date of publication of application: **31.05.2023**
(21) Application number: 22209684.4
(22) Date of filing: 25.11.2022
(51) Int. Cl.: B01J 2/10, B01F 27/60, B01F 27/701, B01F 27/706, B01F 35/00

(54) **MANUFACTURING APPARATUS**

(30) Priority: 25.11.2021 JP 2021191456
(71) Applicant: Shin Nichinan Co., Ltd., Kanagawa 224-0044 (JP)
(72) Inventor: Furuse, Naomi, Yokohama-shi, 224-0044 (JP); Takahashi, Keiichi, Yokohama-shi, 224-0044 (JP)
(74) Representative: Kronthaler, Schmidt & Coll.

(57) **Abstract**

[Problems] Provision of a manufacturing apparatus that can perform steps including a kneading step to a granulating step in one apparatus, can achieve a reduced size of the apparatus as a whole, and can reduce the variation in the diameter of kneaded granules.

[Solution] A manufacturing apparatus (1) comprises: a kneading section (4) provided on an upstream side in a carrying direction in a housing (2), the kneading section feeding a kneaded material to a downstream side in the carrying direction while kneading a raw material; a granulating section (5) provided on the downstream side in the carrying direction in the housing, the granulating section performing granulation from the kneaded material generated in the kneading section; first and second rotating shafts (6, 7) provided along the carrying direction in the housing and arranged to face each other, the first and second rotating shafts rotating at unequal speeds; kneading members provided on the first and second rotating shafts at positions corresponding to the kneading section; and granulating members provided on the first and second rotating shafts at positions corresponding to the granulating section, wherein a dam plate (3) is provided to partition the kneading section and the granulating section and adjust an amount of the kneaded material discharged from the kneading section to the granulating section, and the first and second rotating shafts pass through the dam plate.

## Description

### Technical Field

The present invention relates to a manufacturing apparatus.

### Background Art

High-moisture clay generated in quarries and construction sites, dehydrated cake produced in steps of treating wastewater generated in factory production steps or the like, etc. are highly wet, and collected dust such as powder dust generated in factories is dry fine powder; therefore, they are difficult to handle independently. From the viewpoint of effectively utilizing the contained components, however, it is desired to change the properties to be easy to handle by granulation. For example, in the method of Patent Document 1, granulation is performed so as to obtain a desired shape using a vacuum extruder that is composed of a screw unit having a kneading function or extrusion function, a vacuum chamber (decompression chamber) provided in a part of the screw unit, and an extrusion port having a hole with an arbitrary hole diameter.

Granulating apparatuses are also known, such as a granulating apparatus having only a granulating function without a kneading function (for example, Patent Documents 2 and 3). The granulating apparatus described in Patent Document 2 performs the granulation by rotating a rotating shaft to which rods are fixed, rather than having an extrusion port. The granulating apparatus described in Patent Document 3 is an approximately cylindrical horizontal granulating apparatus, which is supplied with materials and water and is composed of agitator blades that are attached to a rotating shaft and chopper blades that are rotationally driven in a horizontal granulating container at a higher speed than the agitator blades.

### Prior Art Documents

### Patent Documents

Patent Document 1: JP2012-121733A
Patent Document 2: JP2011-189296A
Patent Document 3: JP2006-75710A

### Summary of the Invention

### Problems to be solved by the Invention

In the above method described in Patent Document 1, the kneaded material is granulated by being extruded from the extrusion port after kneading, but there is a problem in that this granulation method takes a long time for manufacturing depending on the viscosity of dehydrated cake and the variation in the diameter of obtained granules is large.

On the other hand, the granulating apparatuses described in Patent Documents 2 and 3 have a small variation in the diameter of obtained granules, but do not have a kneading function because the object is powder, so a kneading apparatus has to be separately provided. However, if a kneading apparatus is separately provided, the apparatus as a whole will become large, which may not be preferred from the viewpoints of installation space and cost.

The present invention has been made in view of the above problems and an object of the present invention is to provide a manufacturing apparatus that can perform steps including a kneading step to a granulating step in one apparatus, can achieve a reduced size of the apparatus as a whole, and can reduce the variation in the diameter of kneaded granules.

### Means for solving the Problems

The present invention provides a manufacturing apparatus comprising: a housing; a kneading section provided on an upstream side in a carrying direction in the housing, the kneading section feeding a kneaded material to a downstream side in the carrying direction while kneading a raw material; a granulating section provided on the downstream side in the carrying direction in the housing, the granulating section performing granulation from the kneaded material generated in the kneading section; first and second rotating shafts provided along the carrying direction in the housing and arranged to face each other, the first and second rotating shafts rotating at unequal speeds; kneading members provided on the first and second rotating shafts at positions corresponding to the kneading section; and granulating members provided on the first and second rotating shafts at positions corresponding to the granulating section, wherein a dam plate is provided to partition the kneading section and the granulating section and adjust an amount of the kneaded material discharged from the kneading section to the granulating section, and the first and second rotating shafts pass through the dam plate.

The manufacturing apparatus of the present invention includes the kneading members provided on the first and second rotating shafts at positions corresponding to the kneading section and the granulating members provided on the first and second rotating shafts at positions corresponding to the granulating section, and the dam plate is provided to partition the kneading section and the granulating section and adjust the amount of the kneaded material discharged from the kneading section to the granulating section. In such a case, if the kneading members and the granulating members are simply provided for one rotating shaft and revolve at the same speed of revolution, it is conceivable that the staying time in each of kneading step and granulating step will be inappropriate due to the difference in the required staying time in each step. Fortunately, however, in the present invention, the dam plate capable of discharge adjustment is provided thereby to allow the staying time in each step to be adjusted even when the kneading members and the granulating members revolve at the same speed of revolution, and it is possible to perform steps including the kneading step to the granulating step in one apparatus and achieve a reduced size of the apparatus as a whole. Further, the rotation of the rotating shaft provided with the kneading members allows the raw materials to be kneaded sufficiently, while the rotation of the rotating shaft provided with the granulating members allows the fine powder to be granulated. Thus, the excessively large clumps in which the dehydrated cake and the fine powder are aggregated with moisture are crushed by the granulating members and re-granulated, and the variation in the granule diameter is therefore small.

Preferably, the kneading members may be paddles, the paddles may be provided at predetermined intervals on outer peripheries of the rotating shafts, the paddles provided on the first and second rotating shafts may include paddles closest to the dam plate, and at least the paddles closest to the dam plate may be provided in a reverse phase such that their paddle faces feed the kneaded material in a direction opposite to the carrying direction of the kneaded material. The paddles close to the dam plate are provided in the reverse phase, and the raw materials that have been carried are thereby carried in the opposite direction by the reverse-phase paddles. This allows the kneaded material to stay in the kneading section for a long time, and it is possible to sufficiently knead the kneaded material therein and to prevent a large amount of kneaded material from being carried to the granulating section side at one time; therefore, even when the kneading section and the granulating section share the rotating shafts, the desired kneading and granulation can be performed.

Preferably, the dam plate may be composed of a fixed dam plate that supports the first and second rotating shafts to be rotatable and a movable dam plate that can be attached to and detached from the fixed dam plate, and the dam plate may be configured such that a height of the dam plate can be changed by attaching or detaching the movable dam plate. The height of the dam plate is thus variable, and the discharge amount from the kneading section to the granulating section can thereby be adjusted to a desired amount.

Preferably, the paddles closest to the dam plate may be provided to extend so that distances between the dam plate and side end portions of the paddles become small. By changing the shape of paddles so that the distances are shortened, most of the kneaded material that has been carried can be carried in the opposite direction by the reverse-phase paddles, and the kneaded material adhering to the dam plate can be cleaned.

Preferably, the housing may be formed with a groove portion and provided with a slit member that protrudes outward from the housing and is formed with a slit, the groove portion and the slit formed in the slit member may communicate with each other, and the fixed dam plate may be pressed against and fixed to a wall surface on the granulating section side of side walls constituting the slit of the slit member while being inserted into the groove portion provided in the housing. With such a configuration, the dam plate can be fixed to the wall surface on the downstream side in the carrying direction, and the dam plate can be reliably fixed to the housing.

Preferably, the paddles may be provided at predetermined intervals on outer peripheries of the rotating shafts, the paddles provided on the first and second rotating shafts may include paddles closest to the dam plate, and at least the paddles closest to the dam plate may be provided in a reverse phase such that their paddle faces feed the kneaded material in a direction opposite to the carrying direction of the kneaded material.

### Advantageous Effect of the Invention

According to the manufacturing apparatus of the present invention, it is possible to perform steps including the kneading step to the granulating step in one apparatus and achieve a reduced size of the apparatus as a whole.

### Brief Description of Drawings

FIG. 1 is a schematic top view of the appearance of a manufacturing apparatus.
FIG. 2 is a schematic side view of the manufacturing apparatus.
FIG. 3 is a perspective view illustrating the structure of a dam plate.
FIG. 4 is a set of (1) a front view illustrating the structure of the dam plate and (2) a side view illustrating the relationship between the dam plate and a slit of a housing side surface.
FIG. 5 is a schematic top view of the inside of the manufacturing apparatus.
FIG. 6 is a partial schematic side view of the inside of the manufacturing apparatus.
FIG. 7 is an enlarged view of a paddle for describing the paddle.
FIG. 8 is a partially enlarged view of rotating shafts for schematically describing paddle rows.
FIG. 9 is an A-A' arrow view of the inside of the manufacturing apparatus.
FIG. 10 is a B-B' arrow view of the inside of the manufacturing apparatus;

### Embodiments for Carrying out the Invention

Hereinafter, a manufacturing apparatus according to an embodiment of the present invention will be described in detail with reference to the accompanying drawings. Note, however, that this embodiment is merely exemplified, and the present invention is not limited to this.

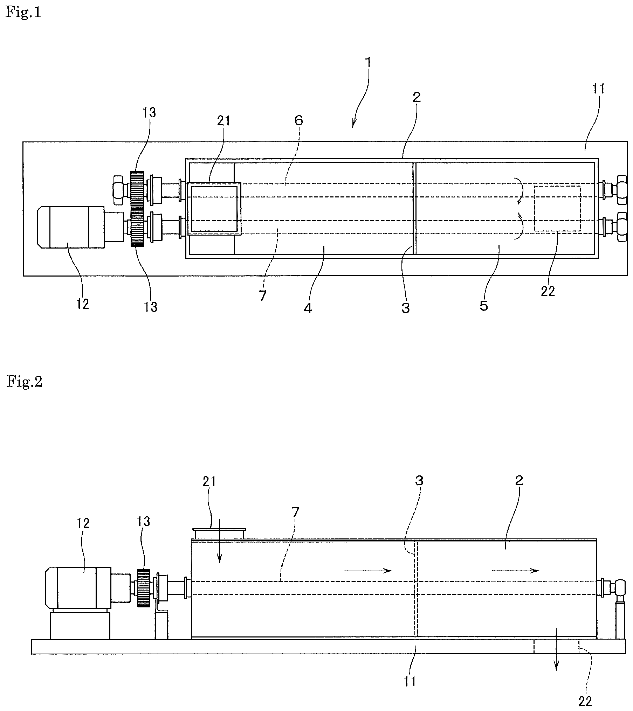

The manufacturing apparatus according to an embodiment of the present invention will be described with reference to FIGS. 1 to 9.

### (Overview Configuration of Manufacturing Apparatus)

First, the overview of the manufacturing apparatus of the present embodiment will be described with reference to FIGS. 1 and 2. Methods of granulating wet raw materials include a rolling method, an extrusion molding method, and an agitating method. The manufacturing apparatus of the present embodiment may be classified into apparatuses using the agitating method. As illustrated in FIGS. 1 and 2, a manufacturing apparatus 1 has a housing 2. The housing 2 may have a rectangular parallelepiped shape elongated in one direction and may be installed, for example, on a frame 11 so as to be horizontal to the floor surface. The housing 2 may be provided with an inlet port 21 for inputting (throwing) raw materials to be kneaded into the housing 2 from a hopper (not illustrated). The inlet port 21 may be provided at the left end portion of the upper surface of the housing 2. The housing 2 may be further provided with an outlet port 22 for discharging (dropping) granules from the housing 2 onto a conveyor (not illustrated). The outlet port 22 may be provided at the right end portion of the bottom surface of the housing 2.

The housing 2 is partitioned into a kneading section 4 on the left side in the figure and a granulating section 5 on the right side in the figure by a dam plate 3 (details will be described later) as a discharge adjusting member. In the kneading section 4, the raw materials input from the inlet port 21 are kneaded to form a kneaded material. In the granulating section 5, the kneaded material formed in the kneading section 4 is carried through the dam plate 3 and granulated. That is, the raw materials input into the kneading section 4 from the inlet port 21 side are carried to the granulating section 5 while being kneaded, flow into the granulating section 5 through the dam plate 3, and are discharged from the outlet port 22. The direction indicated by the arrows in FIG. 2 represents the carrying direction in which such raw materials are carried. The left side in the figure is the upstream side in the carrying direction, and the right side in the figure is the downstream side in the carrying direction.

The raw materials in the present embodiment may be, but are not limited to, dehydrated cake and powder. For example, the raw materials may be those consisting only of dehydrated cake or may also be those in which additives such as powders (e.g., stone powder and lime powder), various chemicals, liquids, and cement are added to a material that contains moisture, such as dehydrated cake.

Here, the dehydrated cake may be obtained by dehydrating the solid content contained in wastewater generated in the manufacturing process for lime products. The moisture content of the dehydrated cake may be, for example, 10% to 50% or preferably 20% to 40%, depending on the dehydrating performance of the dehydrator for forming the dehydrated cake. When the raw materials contain water, such as in the dehydrated cake, the aggregation is strong and the dispersibility and fluidity are poor. To knead the dehydrated cake in particular, therefore, shear mixing may be performed to finely shear the materials and homogenize the raw materials. When the main purpose is granulation, the proper moisture content may be set in accordance with the characteristics of the raw materials (particle diameter distribution, specific gravity of the raw materials, etc.), but when stone powder as powder is compounded as part of the raw materials, the moisture content may be preferably 10% to 15% and more preferably 13% to 14%. Moreover, if fine powders of about 100 µm or less or clays in which fine powders are aggregated with moisture are used without any modification, problems such as dust generation and adhesion will occur, but when they are granulated, various effects can be obtained, such as prevention of dust generation, reduction of adhesion, improvement of fluidity, and prevention of segregation, which may be preferred.

In the housing 2, two rotating shafts 6 and 7 having the same diameter are installed in parallel with each other through the dam plate 3 along the longitudinal direction of the housing 2 and rotate toward inside when viewed from above. In the present embodiment, the rotating shafts 6 and 7 rotate thereby to allow kneading members and granulating members (illustration is omitted in FIGS. 1 and 2) attached to the rotating shafts to continuously perform the kneading step and the granulating step. The present apparatus is configured such that, even though a carrying means is not provided, the rotating shafts 6 and 7 provided with the kneading members and granulating members are rotated thereby to allow the raw materials input from the inlet port 21 to pass through the kneading section 4, the dam plate 3, and the granulating section 5 before being discharged from the outlet port 22 as desired granules.

The rotating shafts 6 and 7 may be individually provided with respective motors and rotated at unequal speeds, but as illustrated in the figures, only one motor 12 may be provided to drive both the rotating shafts 6 and 7. For example, the one motor 12 and its peripheral components may be configured such that the rotational driving force of the motor 12 in one direction is transmitted to the rotating shaft 7 to rotate its in the one direction while the driving force is also transmitted to the rotating shaft 6 via gears 13 to rotate the rotating shaft 6 in the opposite direction. By not providing a motor for each of the rotating shafts 6 and 7 individually, it is possible to configure the manufacturing apparatus in a space-saving manner. If larger driving force is required, the rotating shafts 6 and 7 may be provided with respective motors.

In the present embodiment, the kneading section 4 and the granulating section 5 share the two rotating shafts 6 and 7. In general, in a kneading apparatus that performs kneading with kneading members provided on a rotating shaft, the rotation speed is set low in order to sufficiently perform the kneading, while on the other hand, in a granulating apparatus that performs granulation with granulating members provided on a rotating shaft, the rotation speed is set high in order to enhance the centrifugal force; therefore, when an apparatus having both the kneading function and the granulating function is designed, the rotating shaft cannot be shared by the kneading apparatus and the granulating apparatus. That is, the required staying time differs between the kneading apparatus and the granulating apparatus. On the other hand, if separate apparatuses are configured, the apparatuses as a whole will be large and require an installation space. Moreover, if the rotating shaft is shared by the kneading apparatus and the granulating apparatus, the low rotation speed will cause insufficient centrifugal force and the desired granulation cannot be performed, while on the other hand, the high rotation speed will cause the kneaded material, which is not sufficiently kneaded, to be carried to the granulating section, and a situation such as failure in granulation may occur.

Fortunately, however, in the present embodiment, to achieve a reduced size of the apparatus, the dam plate 3 capable of discharge adjustment is provided to partition the kneading section 4 and the granulating section 5 and adjust the discharge amount from the kneading section 4 to the granulating section 5 so that the kneading and granulation can be performed appropriately even under the same rotation speed condition due to the sharing of the rotating shafts 6 and 7 by the kneading section 4 and the granulating section 5. This allows the kneaded material to be carried to the granulating section 5 after sufficiently performing the kneading with an increased staying time of the raw materials in the kneading section 4, and the manufacturing apparatus can thus be configured with a reduced size so as to perform the desired kneading and granulation.

### (Dam Plate)

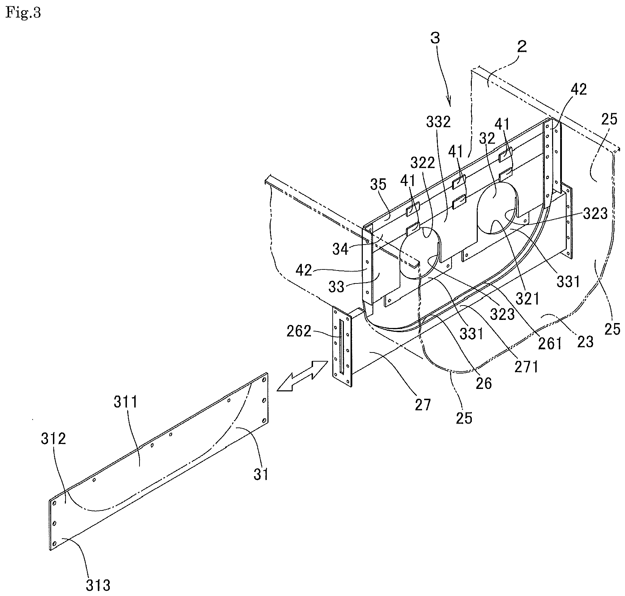

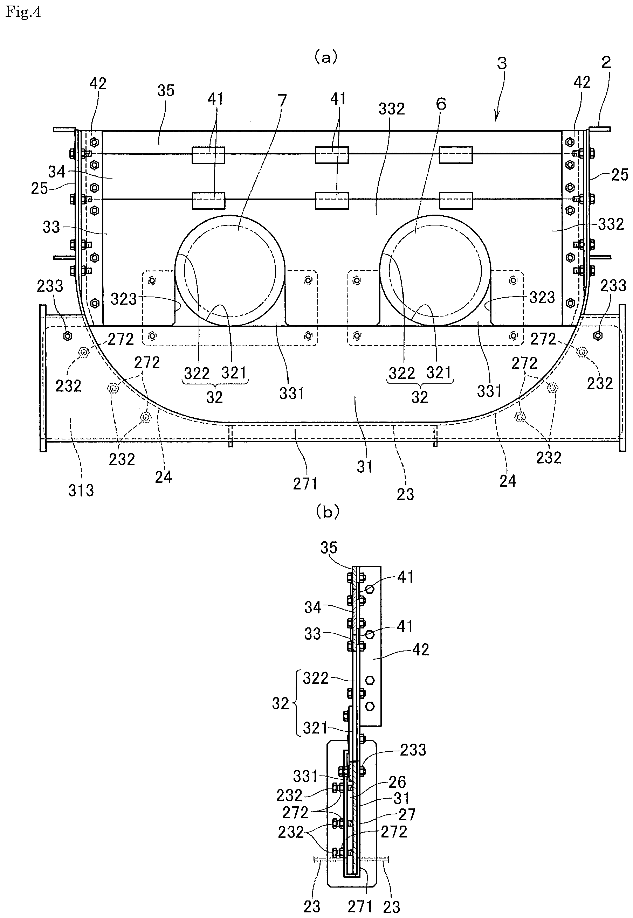

The details of the dam plate 3 in the manufacturing apparatus of the present invention will be described below. As illustrated in FIGS. 3 and 4, the dam plate 3 includes a fixed dam plate 31 that is fixed to the housing 2, a through dam plate 33 that is fixed to the fixed dam plate 31 and formed with through holes 32 through which the rotating shafts 6 and 7 pass, and a lower movable dam plate 34 and an upper movable dam plate 35 that are attached to the upper portion of the through dam plate 33 to make the height of the dam plate 3 variable in the up-down direction.

The through dam plate 33 is composed of two lower dam plates 331 that form the lower side of each through hole 32 and an upper dam plate 332 that forms the upper side of each through hole 32. The upper end portion of each lower dam plate 331 is formed with a semicircular lower concave portion 321. The upper dam plate 332 is formed with upper concave portions 323 each having a semicircular portion 322 formed from the lower end toward the upper end of the upper dam plate 332. Combination of the lower dam plates 331 and the upper dam plate 332 in the up-down direction allows the circular through holes 32 to be formed by the lower concave portions 321 and the semicircular portions 322 of the upper concave portions 323. The through holes 32 thus formed are slightly larger than the outer peripheries of the rotating shafts 6 and 7 and therefore do not hinder the rotation of the rotating shafts 6 and 7.

The lower movable dam plate 34 is arranged on the upper end of the through dam plate 33 and fixed by fixing members 41 as appropriate. The upper movable dam plate 35 is arranged on the upper end of the lower movable dam plate 34 and fixed by fixing members 41 as appropriate. Both the movable dam plates 34 and 35 are configured to be detachable from the dam plate 3 by detaching the fixing members 41, and can thus be attached or detached thereby to change the height of the dam plate 3. In the present embodiment, provided that the height of the dam plate 3 is 1 when the dam plate is composed of the fixed dam plate 31, the through dam plate 33, the lower movable dam plate 34, and the upper movable dam plate 35, the dam plate 3 is configured such that the height of the dam plate 3 is 0.75 when the dam plate is composed only of the fixed dam plate 31 and the through dam plate 33 while the height is 0.90 when the dam plate is composed of the fixed dam plate 31, the through dam plate 33, and the lower movable dam plate 34. The end portions of the through dam plate 33, lower movable dam plate 34, and upper movable dam plate 35 in the width direction of the housing 2 are provided with L-shaped members 42 having an L-shaped cross section across the through dam plate 33, the lower movable dam plate 34, and the upper movable dam plate 35, and they are fixed to side wall surfaces 25 of the housing 2 via the L-shaped members 42. The fixed dam plate as referred to in the present invention is composed of the fixed dam plate 31 and the through dam plate 33.

The housing 2 is provided with a slit member 27 that is attached to the housing 2 across a bottom surface 23 of the housing 2 to the side walls 25. The slit member 27 is formed with a slit 26. Specifically, the end portions in the short direction of the bottom surface 23 of the housing 2 are curved and continuous with the side wall surfaces 25. That is, the housing 2 has curved portions 24 between both end portions in the width direction of the bottom portion 23 and the side wall surfaces 25. The slit member 27 has a shape corresponding to the bottom surface 23 and the curved portions 24 so as to be provided over the bottom surface 23 and the curved portions 24. The length of the slit member 27 in its longitudinal direction is longer than the length of the housing 2 in its width direction, and the slit member 27 is therefore provided so as to protrude from the housing 2. In the slit member 27, two plate-like portions (wall surfaces) 271 having the same shape are fixed in a state of being separated from each other by a predetermined distance, and the slit 26 is thereby formed between the plate-like portions 271. The slit 26 is open at an upper surface 261 of the slit member 27 and end portions 262 in the width direction of the housing 2. The opening, which is the upper surface 261 of the slit 26, faces the previously described groove portion provided in the housing 2 and communicates with the groove portion. The fixed dam plate 31 is inserted into the slit 26 by being put into one of the end portions 262 of the slit member 27 in the width direction of the slit 26. The slit 26 communicates with the groove portion; therefore, a longitudinal central upper portion 311 of the fixed dam plate 31 is exposed inside the housing 2 and longitudinal end portions 312 are housed in the slit member 27.

The fixed dam plate 31 is attached to the housing 2 so that the longitudinal end portions 312 housed in the slit member 27 are fixed to the slit member 27. Specifically, in a state in which the fixed dam plate 31 is inserted in the slit 26 and pressed against the plate-like portion 271 on the downstream side in the carrying direction, the fixed dam plate 31 is positioned, at corner portions 313 of the longitudinal end portions 312 on the bottom surface side, by positioning pins 232 inserted in through holes 272 provided in the plate-like portion 271 on the upstream side. In this state, the fixed dam plate 31 is fixed to the slit member 27 by fixing pins 233 penetrating the slit member 27 and the fixed dam plate 31. This allows the fixed dam plate 31 to be fixed to the slit member 27 while positioning the fixed dam plate 31. Then, the through dam plate 33 is fixed to the fixed dam plate 31 on the downstream side in the carrying direction, and at least any of the lower movable dam plate 34 and the upper movable dam plate 35 is further fixed on the through dam plate 33, thereby configuring the dam plate 3. In the present embodiment, a total of six positioning pins 232 are provided for the slit member 27, but the number of positioning pins 232 is not limited. On the other hand, it may be preferred to provide a plurality of positioning pins 232 at positions corresponding to the curved portions 24 of the slit member 27 because the positioning is easy.

Thus, the dam plate 3 is provided in the housing 2 thereby to allow the kneading section 4 and the granulating section 5 to be partitioned, and the raw materials are not mixed between in the kneading section 4 and in the granulating section 5, while the rotating shafts 6 and 7 pass through the through holes 32 provided in the dam plate 3 thereby to allow the kneading section 4 and the granulating section 5 to share the rotating shafts 6 and 7. As a result, it is possible to provide a manufacturing apparatus capable of performing the desired kneading and granulation. Moreover, the height of the dam plate 3 is variable, and the amount of the kneaded material carried from the kneading section 4 to the granulating section 5 can be adjusted to an appropriate amount. This allows the raw materials to be sufficiently kneaded to form a kneaded material in a good kneaded state, and a desired amount of the kneaded material can be carried from the kneading area to the granulating area to form granules having a desired size. Further, in the dam plate 3, the through holes 32 are provided by the two lower dam plates 331 and the upper dam plate 332 thereby to enable accurate positioning with respect to the rotating shafts 6 and 7, and as a result the rotation of the rotating shafts 6 and 7 is not hindered. Furthermore, the dam plate 3 is fixed to the slit member 27 in a state of being pressed against the surface of the slit member 26 on the downstream side in the carrying direction, thereby to allow the direction of the pressure applied to the dam plate 3 to coincide with the carrying direction of the kneaded material, and it is therefore possible to suppress the displacement of the dam plate due to carrying the kneaded material and fix the dam plate reliably.

### (Rotating Shafts)

As described above, the rotating shafts 6 and 7 are rotated toward inside when viewed from above. When dehydrated cake and stone powder as the raw materials are kneaded and granulated at a ratio of 3:1 to 1:1, the peripheral speed of the rotating shaft 6 may be 0.5 to 5.0 m/sec, preferably 0.5 to 3.0 m/sec, and most preferably 0.6 to 2.0 m/sec. If the peripheral speed of the rotating shaft 6 is lower than 0.5 m/sec, desired granulation may be difficult, while if it is higher than 5.0 m/sec, desired kneading may be difficult. By rotating within the above-described range of the rotation speed, it is possible to preferably perform the kneading and granulation while the kneading section 4 and the granulating section 5 share the rotating shafts 6 and 7.

In the present embodiment, the rotating shafts 6 and 7 are shared by the kneading section 4 and the granulating section 5; therefore, as described above, the dam plate 3 capable of discharge adjustment is provided to adjust the discharge amount from the kneading section 4 to the granulating section 5 so that the granulation can be performed appropriately even under the same rotation speed condition due to the sharing of the rotating shafts 6 and 7 by the kneading section 4 and the granulating section 5, and this allows the kneaded material to be carried to the granulating section 5 after further sufficiently performing the kneading by controlling the rotation speed to a desired rotation speed. The manufacturing apparatus can thus be configured to perform the desired granulation.

### (Kneading Members)

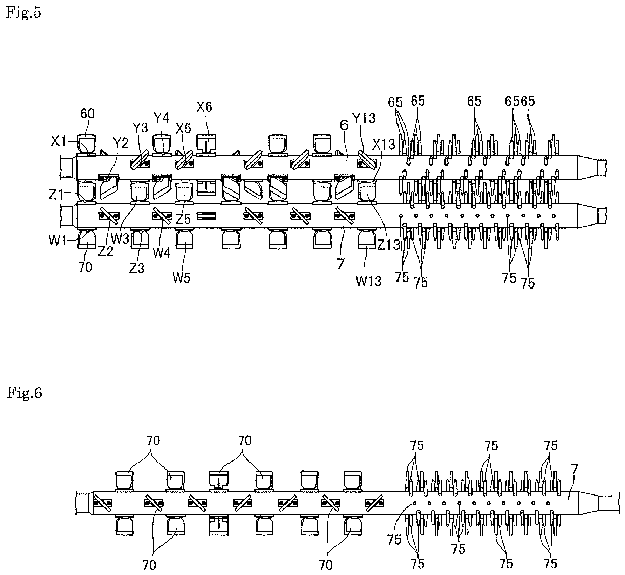

The kneading members provided on the rotating shafts 6 and 7 corresponding to the kneading section 4 will be described below with reference to FIGS. 5 to 9.

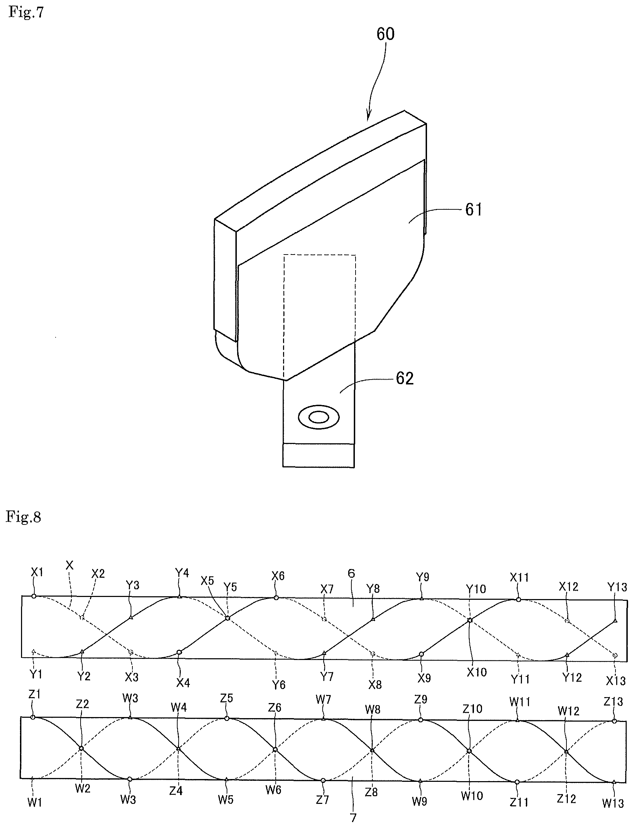

A plurality of paddles 60 and a plurality of paddles 70 as the kneading members are provided to stand on the outer peripheries of the rotating shafts 6 and 7, respectively, at positions corresponding to the kneading section 4. Each paddle 60 and each paddle 70 have the same shape and configuration, so a paddle 60 will be described as an example. As illustrated in FIG. 7, the paddle 60 has an approximately fan-shaped flat plate portion 61 and an approximately rectangular parallelepiped fixing portion 62 to which the flat plate portion 61 is fixed and with which the paddle 60 is fixed to the rotating shaft 6, 7. The flat plate portion 61 is provided to stand at a predetermined angle with respect to the longitudinal direction of the fixing portion 62 in accordance with the position on the rotation shaft 6, 7. The paddles 60 and 70 are configured such that each height (which means an amount of protrusion from the outer periphery of the rotating shaft 6 or 7 and is equal to the sum of the heights of the flat plate portion 61 and the fixing portion 62) is slightly smaller than the distance between the outer peripheral surfaces of the rotating shafts 6 and 7 and the tips of the paddles 60 and 70 come close to the outer peripheries of the counterpart rotating shafts 6 and 7 as they rotate and can self-clean the rotating shafts 6 and 7 by scraping off the kneaded materials adhering to the rotating shafts 6 and 7. Therefore, the tip side of the flat plate portion 61 (the side opposite to the fixing portion 62) is configured to be thicker than the base end side of the flat plate portion 61.

The paddles 60 are arranged so as to form two helical paddle rows X and Y with respect to the rotating shaft 6. That is, in each of the paddle rows X and Y, the paddles 60 are helically arranged on the outer periphery of the rotating shaft 6 at a predetermined helical pitch while being shifted from each other by a predetermined angular pitch (which will be described later) in the rotational direction of the rotating shaft 6. FIG. 8 schematically illustrates the installation positions of the paddles 60 and 70 on the rotating shafts 6 and 7. Solid lines X and Y schematically represent the paddle rows X and Y, respectively, and dotted line portions of the solid lines X and Y indicate the paddle rows X and Y on the back side of the rotating shafts 6 and 7. In FIG. 8, installation positions of the paddles 60 constituting the paddle row X are indicated as X1, X2, ..., and Xn (n is an integer and Xn takes 1 to 13 in the present embodiment) in this order from left to right in FIG. 8, and installation positions of the paddles 60 constituting the paddle row Y are indicated as Y1, Y2, ..., and Yn (n is an integer and Yn takes 1 to 13 in the present embodiment) in this order from left to right in FIG. 8. The paddles constituting each of the paddle rows X and Y are installed and arranged on the rotating shaft 6 so as to be shifted along the outer periphery of the rotating shaft 6 by a predetermined helical pitch and a predetermined angular pitch as the n increases.

The paddles 70 are also arranged so as to form two helical paddle rows Z and W with respect to the rotating shaft 7 like the paddle rows X and Y. That is, in each of the paddle rows Z and W, the paddles 70 are helically arranged on the outer periphery of the rotating shaft 7 at a predetermined helical pitch while being shifted from each other by a predetermined angular pitch in the rotational direction of the rotating shaft 7. With such an arrangement, the paddles 60 forming the paddle row X are helically arranged on the rotating shaft 6, and the paddle row Y is also helically arranged on the rotating shaft 6 so as to be axially separated from the paddle row X by a predetermined distance. On the other hand, the paddle row Z on the rotating shaft 7 is arranged in a helical shape that is opposite to the helix formed by the paddle row X on the rotating shaft 6. The paddle row W on the rotating shaft 7 is arranged in a helical shape that is opposite to the helix formed by the paddle row Y on the rotating shaft 6, and is arranged so as to be axially separated from the paddle row Z by a predetermined distance.

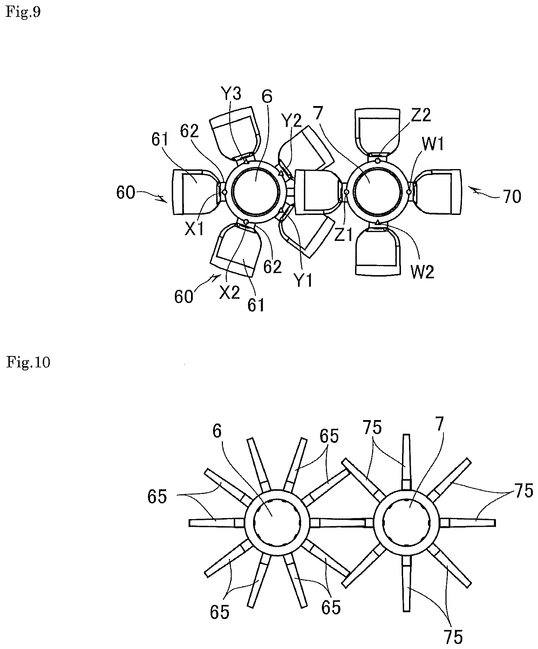

The ratio of the helical pitch of the paddles 60 and the helical pitch (L) of the paddles 70 is configured to be a reciprocal ratio with respect to the rotation speed ratio of the rotating shaft 6 and the rotating shaft 7. For example, when the rotation speed ratio of the rotating shaft 6 and the rotating shaft 7 is 4:5, a reciprocal ratio is set, such as 1L:1.25L. On the other hand, the ratio of the angular pitch of the paddles 60 and the angular pitch of the paddles 70 is configured to be the same ratio as the rotation speed ratio of the rotating shaft 6 and the rotating shaft 7. When the rotation speed ratio of the rotating shaft 6 and the rotating shaft 7 is 4:5, as illustrated in FIG. 9, for example, the ratio of the angular pitch of the paddles 60 and the angular pitch of the paddles 70 is the same ratio as the rotation speed ratio of the rotating shaft 6 and the rotating shaft 7, such as the angular pitch of the paddles 60 in each thread (row) being 90° and the angular pitch of the paddles 70 being 72°. The axial carrying speeds of the rotating shafts 6 and 7 are therefore the same.

As described above, when the distance between the paddles 60 is large upon kneading of the raw materials particularly including dehydrated cake, it may be difficult to finely shear the raw materials. In the present embodiment, therefore, two threads of each of the paddle rows X to W of narrow-width paddles 60 and 70 are provided on each of the rotating shafts 6 and 7, and it is thereby possible to knead the raw materials to form a kneaded material while shearing the raw materials more finely.

The paddle surfaces of the paddles 60 and 70 are either in a normal phase in a direction along the helix (feeding helix) with which the paddle surfaces feed the kneaded material in the carrying direction or in a reverse phase in which the paddle faces are symmetrical to those in the normal phase with respect to the rotation center line of each rotating shaft. That is, each of the paddles 60 and 70 is provided to stand at a predetermined angle so that the flat plate portion 61 is either in the normal phase or the reverse phase with respect to the longitudinal direction of the fixing portion 62 depending on the position on each rotating shaft. In addition, the paddles 60 and 70 are arranged so that the phases of the paddle surfaces at the paddle positions facing each other on the rotating shafts 6 and 7 are the same.

In the present embodiment, the paddles 60 whose center positions are X13 and Y13, which are closest to the dam plate 3 on each rotating shaft, are provided in the reverse phase. In this case, the raw materials input from the inlet port 21 are carried to the granulating section 5 side as the rotating shafts 6 and 7 rotate, but will be carried in the opposite direction by the reverse-phase paddles 60 before the dam plate 3. This allows the kneaded material to stay in the kneading section 4 for a long time, and it is possible to sufficiently knead the kneaded material therein and to prevent a large amount of kneaded material from being carried to the granulating section 5 side at one time; therefore, even when the kneading section 4 and the granulating section 5 share the rotating shafts 6 and 7, the desired kneading and granulation can be performed.

In the present embodiment, each of the paddle rows X, Y, Z, and W is composed of 13 paddles 60 or 70 and has an arrangement in which the directions of the paddles 60 or 70 are consecutively "normal phase, normal phase, and reverse phase." In the present embodiment, X11 to X13 and Y11 to Y13 include the arrangement of "normal phase, normal phase, and reverse phase." This arrangement of "normal phase, normal phase, and reverse phase" allows the kneaded material to undergo the action of "feed, feed, and return," but the number of the normal-phase paddles 60 and 70 is larger than the number of reverse-phase paddles 60 and 70 as a whole, and the kneaded material is therefore carried in the carrying direction while being agitated by the paddles 60 and 70. Here, "feed" means movement in the same direction as the carrying direction, and "return" means movement in the opposite direction to the carrying direction. The flow of the kneaded material in the carrying direction may get stacked at a plurality of sites at which the normal-phase paddles 60 and 70 and the reverse-phase paddles 60 and 70 are adjacent to each other. This allows the kneaded material interposed and pressed between the paddles 60 and 70 to be less likely to escape in the carrying direction or the opposite direction, and the effect of crushing the kneaded material (in particular, clumps called lumps) can be enhanced. Moreover, the staying time from the input of materials of the kneaded material to the discharge of the kneaded material becomes long because the flow in the carrying direction gets stacked, and the agitation operation including the operation of crushing the lumps can be sufficiently performed many times, thus eliminating the lumps and enabling the sufficient and uniform kneading. Furthermore, even when the manufacturing apparatus is configured to have a reduced size as a continuous-type apparatus, the staying time of the kneaded material can be increased to perform the sufficient and uniform kneading.

The paddles 60 whose center positions are X6 and Y6 are in a "flat phase" in which the paddles 60 are provided parallel to the rotating shaft 6. In the present embodiment, the paddle rows X and Y are arranged with the paddles 60 in the order of "normal phase, flat phase, and reverse phase" including such a flat phase. The kneaded material is fed in the carrying direction by the normal-phase paddles 60, passes by the flat-phase paddles 60, and is pushed back in the opposite direction by the reverse-phase paddles 60, and the agitation operation can therefore be performed many times, thus enabling the sufficient and uniform kneading. In the present embodiment, the paddles 70 whose center positions are W6 and Z6 on the rotating shaft 7 are also in the "flat phase" corresponding to the paddles 60 whose center positions are X6 and Y6. In the present embodiment, the paddles 60 whose center positions are X6 and Y6 are paddles 60 for "flat phase" that have a different shape than that of ordinary paddles 60, but the present invention is not limited to this, and paddles having the same shape may be used. In the above-described embodiment, each paddle row is provided so as to have the sequence of "normal phase, normal phase, and reverse phase" or "normal phase, flat phase, and reverse phase" once, but the present invention is not limited to this, and each paddle row may be provided so as to have at least one or more of either one of such sequences. For example, each paddle row may be provided such that the sequence of "normal phase, normal phase, and reverse phase" is repeated multiple times.

As will be understood, the configurations such as the shape and arrangement of the paddles 60 and 70 are not limited to those described above, depending on the kneading conditions (e.g., the state of kneaded material to be formed, the type of raw materials, etc.). The number of threads of helical lines along which the paddles 60 or 70 are arranged may be three or more, or may be one. Moreover, the above ratio of angular pitches and the above rotation speed ratio are not limited to 4:5, and may be N-1:N where N is an integer of 2 or more in the same manner as described above.

### (Granulating Members)

Granulating members provided on the rotating shafts 6 and 7 corresponding to the granulating section 5 will then be described with reference to FIGS. 5, 6, and 10. At positions corresponding to the granulating section 5, a plurality of cylindrical rods 65 and a plurality of cylindrical rods 75 as the granulating members are provided to stand on the outer peripheries of the rotating shafts 6 and 7, respectively, in the radial directions of the rotating shafts 6 and 7 (directions perpendicular to the axial directions of the rotating shafts 6 and 7). The rods 65 are arranged along two threads of helical lines on the rotating shaft 6. For example, as illustrated in FIG. 10, the rods 75 are helically arranged at a helical pitch spaced apart by a predetermined distance in the axial direction of the rotating shaft 7 and at an angular pitch of 45° obtained by dividing 360° of the entire circumference into 8 equal parts in the circumferential direction. Basically likewise the rods 75, the rods 65 are helically arranged at a helical pitch spaced apart by an equal distance in the axial direction of the rotating shaft 6 and at an angular pitch of 36° obtained by dividing 360° into 10 equal parts in the circumferential direction. The helices of the arranged rods 75 are opposite to the helices formed by the arranged rods 65. The lengths of the rods 65 and 75 are configured such that the tips of the rods 65 and 75 come close to the outer peripheral surfaces of the opposing rotating shafts 6 and 7 as they rotate.

As described above, the rotating shafts 6 and 7 are rotated at unequal speeds. Here, the rotation speed ratio (ratio of rotation number per unit time) of the rotating shafts 6 and 7 is 4:5, which is the same ratio as the ratio of angular pitches of 36°:45° as in the kneading members. Such a configuration prevents the rods 65 and 75 from colliding with each other. The ratio of the helical pitch of the rod rows formed by the rods 65 and the helical pitch of the rod rows formed by the rods 75 is a reciprocal ratio with respect to 4:5, which is the rotation speed ratio of the rotating shafts 6 and 7, that is, 1.25:1, and the carrying speeds in the axial direction of the rotating shafts 6 and 7 are the same. In the present embodiment, two threads of the rod rows are provided for each of the rotating shafts 6 and 7.

As will be understood, the configurations such as the shape and arrangement of the rods 65 and 75 are not limited to those described above, depending on the granulation conditions (e.g., the size of granules to be generated, etc.). The number of threads of helical lines along which the rods 65 and 75 are arranged may be one. Moreover, the above ratio of angular pitches and the above rotation speed ratio are not limited to 4:5, and may be N-1:N where N is an integer of 2 or more in the same manner as described above.

The dehydrated cake and the fine powder aggregated with moisture during the granulation of the fine powder may become excessively large clumps, which are crushed and re-granulated by the granulating members; therefore, the granules thus produced by the manufacturing apparatus 1 are those having a desired size, and in the granules the raw materials are homogenized by kneading.

### (Examples)

The staying time in each of the kneading section 4 and the granulating section 5 was obtained when the kneading and granulation were performed using the manufacturing apparatus 1 of the above-described embodiment. The staying time was obtained from a "volumetric throughput per minute" of the input raw materials for an "effective volume." The effective volume can be determined by multiplying an "internal volume" obtained from the apparatus shape and dimensions of the kneading section 4 and the granulating section 5 by a "filling rate" obtained by visual confirmation. In the above-described manufacturing apparatus 1, the height of the dam plate 3 was set to 0.75, and the rotation speed of the rotating shafts 6 and 7 was set to 40 min⁻¹. The input raw materials were dehydrated cake and stone powder. In this case, the staying time in the kneading section 4 was about 5 minutes, and the staying time in the granulating section 5 was about 1 minute. Even though the kneading section 4 and the granulating section 5 had the same rotating shafts 6 and 7, the staying time in the kneading section 4 was able to be lengthened, and the desired kneading and granulation were thus able to be performed.

In addition, kneading and granulation were performed using the manufacturing apparatus 1 of the above-described embodiment under Conditions 1-1 to 1-6 and 2 listed in Table 1, and the kneaded granules were evaluated. In all cases, variation in the diameter of the kneaded granules was small and was highly evaluated (o).

**(Table 1)**

| Condition | 1-1 | 1-2 | 1-3 | 1-4 | 1-5 | 1-6 | 2 |
|---|---|---|---|---|---|---|---|
| Diameter | 0.190 m | 0.190 m | 0.190 m | 0.190 m | 0.190 m | 0.190 m | 0.580 m |
| Rotation speed | 60.0 min⁻¹ | 84.0 min⁻¹ | 100.0 min⁻¹ | 100.0 min⁻¹ | 100.0 min⁻¹ | 100.0 min⁻¹ | 60.0 min⁻¹ |
| Peripheral speed | 0.6 m/s | 0.8 m/s | 1.0 m/s | 1.0 m/s | 1.0 m/s | 1.0 m/s | 1.8 m/s |
| Raw materials | Compound of powder and cake | Lumps of mixed main and sub material s | Lumps of mixed main and sub materials | Lumps of mixed main and sub materials | Lumps of mixed main and sub materials | Lumps of mixed main and sub materials | Compound of powder and cake |
| Main raw material | Stone powder 75% | Stone powder 75% | Stone powder 75% | Stone powder 75% | Stone powder 75% | Stone powder 75% | Steel stone powder 65-90% |
| Sub raw materials | Dehydrat ed cake 25% | Dehydrat ed cake 25% | Dehydrate d cake 25% | Dehydrate d cake 25% | Dehydrate d cake 25% | Dehydrate d cake 25% | Carbon powder 10-15, dehydrate d cake 0-20% |
| Moisture content | 12.9% | 13.0% | 13.1% | 13.2% | 14.1% | 13.1% | 12-15% |
| Granule diameter | 1-3 mm | 2-5 mm | 2-5 mm | 2-5 mm | 3-7 mm | 2-5 mm | 5-10 mm |
| Evaluation | ∘ | ∘ | ∘ | ∘ | ∘ | ∘ | ∘ |

The above one or more embodiments are described to facilitate understanding of the present invention and are not described to limit the present invention. It is therefore intended that the elements disclosed in each of the above embodiments include all design changes and equivalents to fall within the technical scope of the present invention.

In the present embodiment, the paddle rows X to W are basically composed of the paddles 60 and 70 having the same shape, but the present invention is not limited to this. For example, in the paddles 60 (paddles whose center positions are X13, Y13, Z13, and W13) closest to the dam plate 3 on each rotating shaft 6, 7, the flat plate portion 61 may be formed to extend toward the dam plate 3 so as to be close to the dam plate 3. That is, in the above-described embodiment, the flat plate portion 61 is in a bilaterally symmetric fan shape, but may also be in a bilaterally asymmetric shape that further has an extension portion extending from the flat plate portion 61 toward the dam plate 3 side and close to the dam plate 3 so that the distance between a side end portion of the flat plate portion 61 and the dam plate 3 becomes short. By using such paddles, it is possible to grind the kneaded material, increase the shearing effect, and self-clean the kneaded material adhering to the dam plate 3 with the paddles. In the present embodiment, the rotating shafts 6 and 7 are shared by the kneading section 4 and the granulating section 5, and it is therefore important to dam the carried, kneaded material to some extent with the dam plate 3 as described above. If the kneaded material adheres to the dam plate 3, control of the carrying amount may be affected. In this context, self-cleaning is performed with the flat plate portions 61 having extension portions close to the dam plate 3, and it is thereby possible to control the carrying amount through the dam plate 3 more accurately. In the present embodiment, each paddle is in a fan shape in plan view, but is not limited to this, and may be, for example, in a rectangular shape in plan view.

In the manufacturing apparatus 1, the kneading section 4 may be further provided with a kneading section dam plate, different from the dam plate 3, that dams the kneaded material to a predetermined height. This kneading section dam plate may also be configured to have a variable height. Additionally or alternatively, one or more side dam plates may be provided in the kneading section. The side dam plates may be provided in the kneading section 4 of the housing 2 so as to protrude toward the rotating shafts 6 and 7 by a predetermined amount from the right and left inner surfaces of the housing 2 on the sides of the rotating shafts 6 and 7 and can partially dam the kneaded material on the sides of the rotating shafts 6 and 7.

### Description of Reference Numerals

- 1: Manufacturing apparatus
- 2: Housing
- 3: Dam plate
- 4: Kneading section
- 5: Granulating section
- 6, 7: Rotating shaft
- 21: Inlet port
- 22: Outlet port
- 26: Slit
- 27: Slit member
- 31: Fixed dam plate
- 32: Through hole
- 33: Through dam plate
- 34: Lower movable dam plate
- 34,: 35 Movable dam plate
- 35: Upper movable dam plate
- 60, 70: Paddle
- 61: Flat plate portion
- 62: Fixing portion
- 65, 75: Rod
- X, Y, Z, W: paddle row

## Claims

1. A manufacturing apparatus comprising:
a housing;
a kneading section provided on an upstream side in a carrying direction in the housing, the kneading section feeding a kneaded material to a downstream side in the carrying direction while kneading a raw material;
a granulating section provided on the downstream side in the carrying direction in the housing, the granulating section performing granulation from the kneaded material generated in the kneading section;
first and second rotating shafts provided along the carrying direction in the housing and arranged to face each other, the first and second rotating shafts rotating at unequal speeds;
kneading members provided on the first and second rotating shafts at positions corresponding to the kneading section; and
granulating members provided on the first and second rotating shafts at positions corresponding to the granulating section, wherein
a dam plate is provided to partition the kneading section and the granulating section and adjust an amount of the kneaded material discharged from the kneading section to the granulating section, and
the first and second rotating shafts pass through the dam plate.

2. The manufacturing apparatus according to claim 1, wherein
the kneading members are paddles,
the paddles are provided at predetermined intervals on outer peripheries of the rotating shafts, and
the paddles provided on the first and second rotating shafts include paddles closest to the dam plate, wherein at least the paddles closest to the dam plate are provided in a reverse phase such that their paddle faces feed the kneaded material in a direction opposite to the carrying direction of the kneaded material.

3. The manufacturing apparatus according to claim 1 or 2, wherein the paddles closest to the dam plate are provided to extend so that distances between the dam plate and side end portions of the paddles become small.

4. The manufacturing apparatus according to any one of claims 1 to 3, wherein the dam plate is composed of a fixed dam plate that supports the first and second rotating shafts to be rotatable and a movable dam plate that can be attached to and detached from the fixed dam plate, and the dam plate is configured such that a height of the dam plate can be changed by attaching or detaching the movable dam plate.

5. The manufacturing apparatus according to claim 4,
wherein the housing is formed with a groove portion and is provided with a slit member that protrudes outward from the housing and is formed with a slit, and the groove portion and the slit formed in the slit member communicate with each other,
wherein the fixed dam plate is pressed against and fixed to a wall surface on the granulating section side of side walls constituting the slit of the slit member while being inserted into the groove portion provided in the housing.
